# FASCICULE DE BREVET EUROPEEN

(11) **EP 2 906 385 B1**
(45) Date de publication et mention de la délivrance du brevet: **06.06.2018**
(21) Numéro de dépôt: 13767041.0
(22) Date de dépôt: 09.09.2013
(51) Int. Cl.: B23K 9/173, B23K 9/23, B23K 26/24, B23K 26/32, B23K 33/00

(54) **PROCEDE D'ASSEMBLAGE PAR SOUDAGE D'UNE TÔLE EN ALUMINIUM AYANT UNE LUMIERE AVEC UNE TÔLE EN ACIER**
SCHWEISSVERFAHREN ZUR MONTAGE EINES ALUMINIUMBLECHES MIT EINEM ANSCHLUSS MIT EINEM STAHLBLECH
WELDING METHOD FOR ASSEMBLING AN ALUMINIUM SHEET HAVING A PORT WITH A STEEL SHEET

(30) Priorité: 09.10.2012 FR 1259612
(43) Date de publication de la demande: 19.08.2015
(73) Titulaire: PSA Automobiles SA, 78300 Poissy (FR)
(72) Inventeur: LENOIR, Romaric, F-78560 le Port Marly (FR); BARDET, Daniel, F-78120 Rambouillet (FR)
(74) Mandataire: Fosse, Danièle
(86) Numéro de dépôt international: PCT/FR2013/052070
(87) Numéro de publication internationale: WO 2014/057183

(56) Documents cités:
- EP-A1- 1 997 579
- CN-A- 102 049 591
- CN-A- 102 500 853
- DE-A1-102011 012 939
- DE-C1- 19 913 436
- JP-A- S4 879 747
- JP-A- 2006 159 253

## Description

La présente invention concerne un procédé d'assemblage de tôles en matériaux différents, dont l'une des tôles est en acier et l'autre en aluminium conformément au préambule de la revendication 1 (voir, par exemple, CN102049591 A).

Dans le domaine automobile et plus particulièrement dans le cadre d'une réduction de la consommation énergétique et donc d'une réduction des émissions de CO2, on souhaite alléger le plus possible les véhicules automobiles. Ainsi, dans l'optique d'allégement des structures, il peut être envisagé de remplacer certains constituants en acier par des éléments en alliage d'aluminium plus légers.

Pour assembler deux constituants dont l'un est en acier et l'autre à base d'aluminium, des solutions d'assemblage mécaniques dites classiques (rivetage, clinchage, vissage) sont connues et applicables. Cependant, il peut être nécessaire, pour des questions de rigidité de réaliser des liaisons continues entre ces éléments.

La métallurgie des alliages Fe-Al étant extrêmement complexe, tout assemblage par fusion entre ces deux matériaux nécessite l'utilisation de technologies particulières et la mise en place de modes opératoires dédiés.

On connaît par DE 199 13436, un procédé d'assemblage d'une plaque acier et d'une plaque en aluminium, un évidement conique étant ménagé dans la plaque en acier permettant à un laser d'atteindre la plaque en aluminium pour y ménager un cratère qui est ensuite rempli de métal d'apport jusqu'à la surface de la plaque en acier. Compte-tenu des différences de point de fusion entre aluminium et acier, la température nécessaire pour ménager le cratère dans la plaque en aluminium n'a pas d'effet sur l'acier. Lors du refroidissement du métal d'apport, la liaison est faite du fait de la forme en cône qui retient mécaniquement la plaque en acier sur la plaque en aluminium le métal d'apport étant en outre ancré au niveau du cratère de la plaque en aluminium.

JP2006159253 propose un procédé d'assemblage de tubes acier/aluminium, le tube acier étant superposé sur le tube acier et des espaces étant prévus pour déposer du métal d'apport et formé un joint entre les deux.

EP 1 997 579 propose un procédé d'assemblage d'acier et de d'aluminium à l'aide d'un fil d'apport à base de fluor et aluminium.

De même, les études réalisées ont démontré la nécessité d'adapter la conception des joints soudés aux spécificités du soudage acier / aluminium.

En effet, l'acier et l'aluminium sont des matériaux qui présentent des propriétés physiques très différentes ce qui rend complexe tout assemblage par fusion. Les principales différences sont les suivantes :

L'écart entre les températures de fusion, Al de 660°C et Fe de 1536°C est considérable et s'accroit encore pour les alliages d'aluminium contenant du silicium. Cet écart très pénalisant en soudage où l'on recherche plutôt la fusion des deux matériaux, peut toutefois s'avérer bénéfique dans le cas d'un brasage (dans ce cas on a une fusion de l'aluminium tandis que l'acier reste solide).

Les dilatations linéiques sont de 23,1.10-6 K-1 pour Al et de 12,6.10-6 K-1 pour Fe (ferrite). Les différences de déformation engendrées au refroidissement entraineront des niveaux de contraintes (traction ou compression) très importantes dans les soudures, ce qui favorise grandement l'apparition de fissures.

Par ailleurs, les propriétés thermiques de l'aluminium et de l'acier sont également différentes, engendrant des comportements thermiques des deux matériaux très différents.

| Capacité thermique massique | | Conductivité thermique |
|---|---|---|
| Al | 897 J.Kg-1.K-1 | 237 W.m-1.K-1 |
| Fe | 450 J.Kg-1.K-1 (ferrite) | 75 W.m-1.K-1 (ferrite) |

Ainsi, lorsqu'on applique une source de chaleur, la répartition énergétique présente une forte dissymétrie de part et d'autre de la liaison. Les conditions opératoires de soudage sont donc toujours très complexes.

Une autre difficulté à réaliser un soudage acier / aluminium est issue du fait qu'il est impossible d'obtenir un alliage ductile entre ces deux matériaux. En effet, la solubilité de l'aluminium dans l'acier étant quasi-nulle, il se forme très rapidement des composés intermétalliques fragiles qui rendent impossible toute utilisation mécanique des alliages formés. Le diagramme d'équilibre prévoit la formation de nombreux composés définis ou intermétalliques.

La solution communément adoptée pour réaliser un assemblage est donc, non pas de souder, au sens propre du terme, l'acier et l'aluminium mais de réaliser une liaison par diffusion, assimilable à du brasage. Ainsi, l'aluminium est porté à l'état liquide alors que l'acier reste solide.

Bien qu'il soit impossible d'éviter la formation des composés intermétalliques, il est toutefois possible d'en maitriser la nature et l'épaisseur de couche en jouant sur l'apport calorifique à l'assemblage, c'est-à-dire en utilisant des technologies de soudage de type arc CMT(Cold Metal Transfer) ou laser.

Toutefois, les analyses métallurgiques ont confirmé la présence des composés intermétalliques entre le métal d'apport et l'acier. Ainsi, bien qu'il ait été démontré que l'épaisseur de la couche formée soit maitrisable par l'utilisation de technologies CMT ou laser, il n'en reste pas moins que cette couche est fragile et qu'il s'avère nécessaire d'adapter la conception des joints soudés aux spécificités de cette liaison.

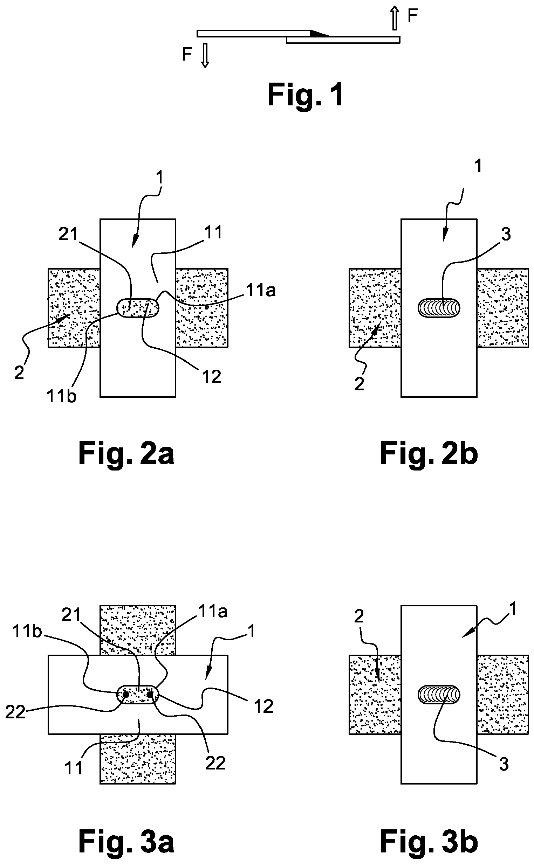

Parmi les configurations de plan de joint, on peut utiliser celle à clin (voir la figure 1) qui se comporte très bien en traction cisaillement. Toutefois, une telle configuration ne supportera pas de contrainte lorsque cet assemblage sera sollicité perpendiculairement à la couche (en traction pure selon la direction F) ou bien en pelage.

L'invention a donc pour objet de proposer un procédé qui permet d'obtenir un assemblage de tôles en matériaux différents présentant dans comportements thermiques différents, telles que d'une tôle acier et d'une tôle aluminium qui permet d'intégrer des changements de direction, si possible avec des transitions douces afin de répartir les sollicitations normales et tangentielles.

La présente invention a pour objet un procédé d'assemblage de tôles en matériaux différents tel que défini dans la revendication 1.

Conformément à l'invention, les tôles sont pour l'une à base d'aluminium et pour l'autre en acier qui présentent des propriétés physiques et thermiques différentes. Ainsi, en réalisant le soudage uniquement au niveau de cette lumière, on obtient une soudure entre les tôles d'acier et d'aluminium équivalente à une soudure électrique par point qui, elle, n'est pas réalisable. Au contraire d'un assemblage de tôles acier/aluminium qui serait réalisé selon une configuration à clin, l'assemblage réalisé selon l'invention présente une tenue mécanique grandement améliorée, en particulier présentant de meilleures valeurs de résistance en traction cisaillement et en traction pure.

Ainsi, le procédé selon l'invention comprend également une étape préalable de découpe d'une lumière dans une des tôles dans une zone dite de superposition.

Conformément à l'invention, la lumière ménagée dans la tôle est une lumière de forme allongée dite en forme de boutonnière.

Le soudage mis en oeuvre dans le procédé de l'invention est un soudage à l'arc électrique du type CMT (Cold Metal Transfer) et on utilise en tant que métal d'apport, un alliage à base d'aluminium, de silicium et de manganèse tel que AlSi3Mn.

L'étape de soudage est ainsi réalisée au niveau de la lumière depuis une extrémité de ladite lumière jusqu'à l'autre extrémité, en réalisant des passes oscillantes d'un bord à l'autre de la lumière.

Conformément à l'invention, l'une des tôles comporte la lumière et l'autre tôle présente au moins une partie emboutie de telle sorte que ledit au moins un relief résultant de l'embouti, est logé dans la lumière de l'autre tôle lors de la superposition des tôles, ledit relief étant positionné dans la lumière avec un jeu par rapport au bord de la lumière.

Ainsi, le procédé selon l'invention comprend en outre une étape d'emboutissage (par exemple par clinchage) d'une tôle dans une zone dite de superposition pour former une partie en relief dans ladite tôle.

De manière avantageuse, on a pu constater que cette partie en relief logée avec jeu dans la lumière améliore encore les qualités de tenue mécanique de l'assemblage réalisé après l'étape de soudage.

Conformément à l'invention, la au moins une lumière est ménagée dans la tôle d'aluminium, la tôle d'acier étant pourvue d'au moins un relief pouvant se loger avec jeu dans ladite lumière, lors de la superposition des tôles.

De préférence, le relief ménagé est sous forme d'un picot. Le jeu entre le picot et le bord de la lumière dans laquelle ledit picot est en saillie lors de la superposition des tôles est de préférence au moins égal au rayon dudit picot.

La lumière étant conformément à l'invention sous forme d'une boutonnière, on peut prévoir sur l'autre tôle de ménager deux picots qui feront saillie dans la lumière lors de l'assemblage.

On décrira maintenant l'invention plus en détails en référence au dessin dans lequel :
La figure 1 représente un assemblage de deux tôles acier/alu selon la configuration à clin de l'état de la technique ;
La figure 2a représente une vue en plan du dessus de deux tôles assemblées avant l'étape de soudage ;
La figure 2b représente une vue en plan selon la figure 2a une fois l'étape de soudage effectuée ;
La figure 3a représente une vue en plan du dessus de deux tôles assemblées selon l'invention avant l'étape de soudage ;
La figure 3b représente une vue en plan selon la figure 3a une fois l'étape de soudage effectuée ;

Comme on peut le voir sur la figure 2a, le procédé d'assemblage propose dans un premier temps de superposer les deux tôles 1, 2. Ainsi, chaque tôle 1, 2 comporte une zone dite de superposition 11, 21.

La tôle 1 qui est en aluminium a au préalable subi une étape de découpe d'une lumière 12 dans ladite zone 11. Cette lumière 12 présente une forme allongée dite en boutonnière.

Une fois, les deux tôles 1 et 2 superposées, on peut voir la tôle d'acier 2 au travers de la lumière 12 ménagée dans la tôle 1. On réalise alors l'étape de soudage à l'aide d'un soudage à l'arc électrique du type CMT. Par exemple, on utilise un fil d'apport en AlSi3Mn sous protection gazeuse par argon. Les paramètres de soudage (intensité de l'arc, débit du gaz de protection, diamètre du fil d'apport, etc) sont classiques à mettre en oeuvre pour l'homme du métier. Le soudage est alors mis en oeuvre depuis une extrémité 12a de la boutonnière jusqu'à l'autre 12b, en réalisant des passes oscillantes d'un bord à l'autre de la boutonnière 12. Les oscillations sont donc sinusoïdales.

Dans l'exemple choisi, la tôle 1 est une éprouvette en ALUMINIUM 5182, d'une épaisseur de 1,2 mm, de dimensions 38 mm x 125 mm et les dimensions de la boutonnière sont 16 mm x 8 mm. La tôle a été dégraissée.

La tôle 2 est une éprouvette en ACIER, d'épaisseur 1 mm, de revêtement G 10/10, de dimensions 38 mm x 125 mm et dégraissée.

Le mode de soudage est du type Mode de soudage CMT (Cold Metal Transfert)

| | | |
|---|---|---|
| Fil d'apport : | nature : | Alu Si 3 Mn |
| | Diamètre: | 12/10 |
| Gaz : | Nature : | Arcal 1 (Argon) |
| | Débit : | 15 l/ min |
| Distance tube contact/pièce : | | 14 mm /1mm |
| Position de soudage : | | A plat et horizontale |
| Support de bain : | | oui |

### Paramètres source de soudage:

| | |
|---|---|
| Vitesse de dévidage du fil : | 4,5 m/min |
| Valeur de correction de hauteur d'arc : | -5% |
| Intensité de soudage | 72amp |
| Vitesse de soudage : | 600 mm/min |

| Paramètres d'oscillation utilisés : | |
|---|---|
| Type d'oscillation : | Sinusoïdale |
| Longueur d'une période d'oscillation : | 1.5 mm |
| Amplitude d'oscillation : | 11 mm |
| Angle d'oscillation : | 90° |

Comme on peut le voir sur la figure 2a, le cordon de soudure 3 obtenu est de très bonne qualité et constitué une soudure « par point ».On soumet ensuite cette soudure à des essais de traction (méthodes classiques) pour mesurer le degré de résistance à la rupture de cette soudure que ce soit en cisaillement ou en traction pure.

On obtient alors les valeurs suivantes pour la traction cisaillement 585 daN (décanewton) et 35 daN pour la traction pure (arrachement à la normale de la soudure).

Aux figures 3a et 3b, on réalise le procédé d'assemblage selon l'invention dans les mêmes conditions que celles décrites pour les figures 2a et 2b, mais on réalise de plus dans la tôle 2 en acier deux picots 22 par clinchage. De préférence, le diamètre des picots 22 est de 4 mm et de préférence le jeu minimal entre la périphérie des picots 22 et le bord de la lumière 12 est alors de 2 mm.

On réalise ensuite l'étape de soudage selon les mêmes conditions que précédemment et on obtient alors l'assemblage tel que représenté à la figure 3a. après soumission de cet assemblage aux essais de traction réalisés de manière similaire, on obtient les valeurs suivantes pour la traction cisaillement 590 daN (décanewton) et 80 daN pour la traction pure (arrachement à la normale de la soudure).

Comme on peut le voir de ces valeurs, le procédé d'assemblage selon l'invention qui met en oeuvre les reliefs de la tôle d'acier associée à la lumière de la tôle d'aluminium permet de doubler la tenue en traction pure de l'assemblage ainsi réalisé et ce, de manière relativement simple à mettre en oeuvre.

## Revendications

1. Procédé d'assemblage de tôles en matériaux différents, qui comprend au moins une étape de superposition des tôles (1, 2) et une étape de soudage, l'une des tôles présentant au moins une lumière (12) au travers de laquelle est accessible l'autre tôle (1, 2), l'une des tôles étant en acier (2) et l'autre tôle (1) étant à base d'aluminium, la au moins une lumière (12) étant ménagée dans la tôle à base d'aluminium (1) et l'étape de soudage étant mise en oeuvre au niveau de ladite lumière (12), par un soudage tel qu'un soudage à l'arc électrique du type CMT (Cold Metal Transfer), un soudage laser dans lequel on utilise en tant que métal d'apport un alliage à base d'aluminium, de silicium et de manganèse, **caractérisé en ce que** la tôle en acier (2) présente au moins une partie emboutie de telle sorte que, lors de l'étape de superposition des tôles (1, 2), au moins un relief (22) résultant de l'embouti, est logé en saillie dans la lumière (12) de l'autre tôle (1), ledit relief (22) étant positionné dans la lumière (12) avec un jeu par rapport au bord de la lumière (12) qui est une lumière de forme allongée dite en forme de boutonnière.

2. Procédé selon la revendication 1, **caractérisé en ce que** l'alliage à base d'aluminium, de silicium et de manganèse est AlSi₃Mn.

3. Procédé selon l'une des revendications 1 et 2, **caractérisé en ce que** l'étape de soudage est réalisée depuis une extrémité (12a) de la lumière (12) jusqu'à l'autre extrémité (12b), en réalisant des passes oscillantes d'un bord à l'autre de la lumière (12).

4. Procédé selon l'une des revendications 1 à 3, **caractérisé en ce que** le relief ménagé dans l'une des tôles est sous forme d'un picot (22), dont les dimensions sont choisies pour que le jeu entre le picot (22) et le bord de la lumière (12) dans laquelle ledit picot (22) est en saillie lors de la superposition des tôles (1, 2) est de préférence au moins égal au rayon dudit picot (22).

## Patentansprüche

1. Montageverfahren von Blechen unterschiedlicher Materialien, das mindestens einen Schritt des Übereinanderlegens der Bleche (1, 2) und einen Schweißschritt umfasst, wobei eines der Bleche mindestens ein Langloch (12) aufweist, durch welches das andere Blech (1, 2) zugänglich ist, wobei eines der Bleche aus Stahl (2) besteht und das andere Blech (1) aus einer Basis aus Aluminium besteht, das mindestens eine Langloch (12) in dem Blech auf Basis von Aluminium (1) angeordnet ist, und der Schweißschritt auf Höhe des Langlochs (12) durch ein Schweißen wie einem elektrischen Lichtbogenschweißen der Art CMT (Cold Metal Transfer) ausgeführt wird, einem Laserschweißen, in dem man als Zusatzmetall eine Legierung auf Basis von Aluminium, Silizium und Mangan verwendet, **dadurch gekennzeichnet, dass** das Stahlblech (2) mindestens ein auf eine Weise tiefgezogenes Teil aufweist, dass, bei dem Schritt des Übereinanderlegens der Bleche (1, 2) mindestens ein aus dem Tiefziehen resultierendes Relief (22) in dem Langloch (12) des anderen Blechs (1) hervorstehend untergebracht wird, wobei das Relief (22) in dem Langloch (12) mit einem Spielraum bezogen auf den Rand des Langlochs (12), der ein Langloch in langgestreckter Gestalt, in Gestalt eines Knopflochs genannt, positioniert ist.

2. Verfahren nach Anspruch 1, **dadurch gekennzeichnet, dass** die Legierung auf Basis von Aluminium, Silizium und Mangan AlSi₃Mn ist.

3. Verfahren nach einem der Ansprüche 1 und 2, **dadurch gekennzeichnet, dass** der Schweißschritt von einem Ende (12a) des Langlochs (12) bis zum anderen Ende (12b) durchgeführt wird, indem oszillierende Durchgänge von einem Rand des Langlochs (12) zum anderen realisiert werden.

4. Verfahren nach einem der Ansprüche 1 bis 3, **dadurch gekennzeichnet, dass** das in einem der Bleche angeordnete Relief in Gestalt eines Zapfens (22) vorliegt, dessen Dimensionen ausgewählt sind, damit der Spielraum zwischen dem Zapfen (22) und dem Rand des Langlochs (12), in welchem der Zapfen (22) bei dem Übereinanderlegen der Bleche (1, 2) vorsteht, vorzugsweise mindestens gleich dem Radius des Zapfens (22) ist.

## Claims

1. Method for assembling metal sheets made of different materials, which comprises at least one step of superimposing the metal sheets (1, 2) and a welding step, one of the metal sheets having at least one opening (12) through which the other metal sheet (1, 2) is accessible, one of the metal sheets being made of steel (2) and the other metal sheet (1) being aluminium-based, the at least one opening (12) being arranged in the aluminium-based metal sheet (1) and the welding step being implemented at the level of said opening (12), through welding such as CMT (Cold Metal Transfer) type electric arc welding, laser welding wherein an aluminium, silicon and manganese-based alloy is used as a filler metal, **characterised in that** the steel metal sheet (2) has at least one stamped part, such that during the step of superimposing the metal sheets (1, 2), at least one elevation (22) resulting from the stamping, is housed protruding in the opening (12) of the other metal sheet (1), said elevation (22) being positioned in the opening (12) with a gap in relation to the edge of the opening (12) which is an opening of an elongated shape, called a slotted hole shape.

2. Method according to claim 1, **characterised in that** the aluminium, silicon and manganese-based alloy is AlSi₃Mn.

3. Method according to one of claims 1 and 2, **characterised in that** the welding step is carried out from an end (12a) of the opening (12) up to the other end (12b), by making oscillating passes from one edge to the other of the opening (12).

4. Method according to one of claims 1 to 3, **characterised in that** the elevation arranged in one of the metal sheets is in the form of a wedge (22), of which the dimensions are chosen such that the gap between the wedge (22) and the edge of the opening (12) wherein said wedge (22) protrudes during the superimposition of the metal sheets (1, 2) is preferably at least equal to the radius of said wedge (22).
